(19) Europäisches Patentamt
European Patent Office
Office européen des brevets

(11) **EP 4 628 351 A1**

(12) **EUROPEAN PATENT APPLICATION**
published in accordance with Art. 153(4) EPC

(43) Date of publication:
08.10.2025 Bulletin 2025/41

(21) Application number: 23905948.8

(22) Date of filing: 19.12.2023

(51) International Patent Classification (IPC):
*B60L 53/10* (2019.01)  *H02J 7/00* (2006.01)

(52) Cooperative Patent Classification (CPC):
B60L 15/20; B60L 53/10; B60L 53/22; B60L 58/10;
H02J 7/00; H02K 1/32; H02K 9/19; Y02T 10/70

(86) International application number:
PCT/CN2023/139865

(87) International publication number:
WO 2024/131785 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.12.2022 CN 202211632911

(71) Applicant: Beijing Chehejia Automobile
Technology Co., Ltd.
Beijing 101300 (CN)

(72) Inventors:
• ZHENG, Lifu
Beijing 101300 (CN)
• MA, Yong
Beijing 101300 (CN)
• LIU, Qiang
Beijing 101300 (CN)

(74) Representative: Regimbeau
20, rue de Chazelles
75847 Paris Cedex 17 (FR)

Remarks:
A request for correction of the description has been filed pursuant to Rule 139 EPC. A decision on the request will be taken during the proceedings before the examining division (Guidelines for Examination in the EPO, A-V, 3).

(54) **ELECTRIC DRIVING SYSTEM FOR TRACTION BATTERY, AND VEHICLE COMPRISING SAME**

(57) An electric driving system for a traction battery, the system comprising an electric motor controller (11), an electric motor (12), and a cooling component, wherein the electric motor (12) comprises three phase circuits, and a first end of each phase circuit is connected to one charging end of a charging pile (200), so as to receive a charging voltage output from the charging end; the cooling component is arranged in the electric motor; and the electric motor controller (11) is connected to a second end of each phase circuit, and the electric motor controller (11) controls a single-phase voltage amplitude charged into the traction battery by each phase circuit, such that the amplitude of a charged voltage charged into the traction battery is within a preset charging voltage range of the traction battery. Further involved is a vehicle.

**FIG. 1**

**Description**

CROSS-REFERENCE TO RELATED APPLICATION

This application claims priority to Chinese patent application No. 202211632911.7 filed on December 19, 2022, the contents of which are hereby incorporated by reference in its entirety.

TECHNICAL FIELD

The application relates to the technical field of vehicle charging devices, and in particular to an electric driving system for a traction battery, and a vehicle including the electric driving system for the traction battery.

BACKGROUND

In a vehicle taking traction batteries as a power source, in order to increase a range of the vehicle, voltage capacities of the batteries are gradually increased. At present, voltage capacities of some traction batteries have been upgraded to be 800 V, while upper limits of output voltages of current charging piles are generally 500 V, 750 V, and 1000 V. Therefore, in order to allow an electric driving system for a high-voltage traction battery to be adapted to charging piles with low-voltage output on the market, it generally needs to add a boost charging module into the electric driving system, such that a 500 V or 750 V charging pile may charge a battery with a capacity of 800 V. In this way, it needs to add an independent module or accessory to achieve boost charging, which results in that a structure of the electric driving system is complicated. If an existing electric driving system is directly connected to the charging pile to rashly reduce a number of devices or simplify the structure, then in case that the upper limit of the output voltage of the charging pile is small (for example, the traction battery is a 800 V battery, and an upper output limit of the charging pile is only 500 V), a temperature of an electric motor rises sharply during an operation thereof due to a higher working intensity, and a too high temperature may affect stability and safety of the electric driving system.

SUMMARY

A purpose of the application is to provide an electric driving system for a traction battery and a vehicle including the electric driving system for the traction battery, to solve the problem in the related art that it is difficult to simplify a structure of a high-voltage battery charging system under a premise of ensuring the stability of a charging process.
According to a first aspect, a technical solution of the application provides an electric driving system for a traction battery, and the electric driving system includes an electric motor controller, an electric motor and a cooling component.
The electric motor includes three phase circuits, and a first end of each of the three phase circuits is connected to a charging end of a charging pile to receive a charging voltage output from the charging end.
The cooling component is arranged in the electric motor.
The electric motor controller is connected to a second end of each of the three phase circuits, and the electric motor controller controls a single-phase voltage amplitude charged by each of the three phase circuits into the traction battery, to allow a charge-in voltage amplitude charged by the electric motor into the traction battery to be in a preset charging voltage range of the traction battery.
In the electric driving system for the traction battery according to some solutions, the electric motor controller may control the single-phase voltage amplitude of each of the three phase circuits by controlling a power-on duty cycle of each of the three phase circuits. An input voltage amplitude, a current voltage amplitude of the traction battery and the duty cycle have a relationship as follows:

$$D = 1 - \frac{u_{in}}{u_{dc}} = \frac{u_{dc} - u_{in}}{u_{dc}}$$

here, $u_{in}$ is the input voltage amplitude, $u_{dc}$ is the current voltage amplitude of the traction battery, and D is the duty cycle.
In the electric driving system for the traction battery according to some solutions, when the charging voltage is greater than a first voltage value, the electric motor controller may control the single-phase voltage amplitude of each of the three phase circuits to be less than a first set threshold, the first set threshold allows a current in each of the three phase circuits to be less than a ripple current, and the first voltage value is determined according to a preset minimum charging voltage value of the traction battery. The first set threshold is pre-set and stored in the electric motor controller.
In the electric driving system for the traction battery according to some solutions, when the charging voltage is less than a second voltage value, the electric motor controller may control the single-phase voltage amplitude of each of the three phase circuits to allow the charge-in voltage amplitude to meet: |the charge-in voltage amplitude - a current voltage amplitude of the traction battery ×A|>a second set threshold. Here, "| |" represents an absolute value symbol, A is an adjustment coefficient and A<1, the second voltage value is determined according to the preset minimum charging voltage value of the traction battery, and the second voltage value is less than the first voltage value. The second set threshold is pre-set and stored in the electric motor controller.

In the electric driving system for the traction battery according to some solutions, the first voltage value may be set to be close to the preset minimum charging voltage value according to a charging range of the traction battery.

In the electric driving system for the traction battery according to some solutions, the second voltage value may be 550 V when a charging range of the traction battery is 600 V-800 V.

In the electric driving system for the traction battery according to some solutions, the electric driving system may further include a connection wire.

The connection wire is provided with a first end connected to a high voltage end of the traction battery, and a second end connected to another charging end of the charging pile.

The cooling component includes a cooling liquid path, the cooling liquid path is at least partially arranged in the electric motor and is in contact with a heat dissipation component, and a cooling liquid medium in the cooling liquid path exchanges heat with the heat dissipation component.

The heat dissipation component includes a rotor core of the electric motor, and the cooling liquid path includes multiple heat dissipation channels penetrating through the rotor core.

In the electric driving system for the traction battery according to some solutions, a motor shaft of the electric motor may be provided with an inner cavity, and the inner cavity is provided with a first liquid hole and a second liquid hole.

A first end plate is arranged at a first end of the motor shaft, a first annular cavity is formed between the first end plate and a first side of the rotor core, and the first annular cavity is in communicate with the first liquid hole.

A second end plate is arranged at a second end of the motor shaft, a second annular cavity is formed between the second end plate and a second side of the rotor core, and the second annular cavity is in communicate with the second liquid hole.

The first annular cavity and the second annular cavity are in communicate with at least one of the multiple heat dissipation channels respectively.

In the electric driving system for the traction battery according to some solutions, the first end plate is provided with multiple first liquid grooves and multiple first liquid spraying ports, and the second end plate is provided with multiple second liquid grooves and multiple second liquid spraying ports.

At least two of the multiple first liquid grooves of the first end plate are in communicate with the multiple second liquid spraying ports in the second annular cavity through different heat dissipation channels respectively, and at least two of the multiple second liquid grooves of the second end plate are in communicate with the multiple first liquid spraying ports in the first annular cavity through different heat dissipation channels respectively, to allow the multiple heat dissipation channels to form a parallel liquid path.

In the electric driving system for the traction battery according to some solutions, each of the multiple first liquid grooves of the first end plate may be in communicate with a respective one of the multiple first liquid spraying ports of the first end plate through one of the multiple heat dissipation channels, a respective one of the multiple second liquid grooves of the second end plate and another one of the multiple heat dissipation channels in sequence, and each of the multiple second liquid grooves of the second end plate may be in communicate with a respective one of the multiple second liquid spraying ports of the second end plate through one of the multiple heat dissipation channels, a respective one of the multiple first liquid grooves of the first end plate and another one of the multiple heat dissipation channels in sequence, to allow the multiple heat dissipation channels to form a series liquid path.

In the electric driving system for the traction battery according to some solutions, holes at two ends of at least one of the multiple heat dissipation channels may be first cooling holes, holes at two ends of at least one of the multiple heat dissipation channels may be second cooling holes, heat dissipation channels corresponding to the first cooling holes are first heat dissipation channels, and heat dissipation channels corresponding to the second cooling holes are second heat dissipation channels.

The first heat dissipation channels are uniformly distributed along a first circumference in the rotor core, the second heat dissipation channels are uniformly distributed along a second circumference in the rotor core, each of the first circumference and the second circumference has a same central axis as the rotor core, and a diameter of the first circumference is less than a diameter of the second circumference.

In the electric driving system for the traction battery according to some solutions, a number of the second heat dissipation channels may be determined according to a number of magnetic steel grooves of the rotor core, and one of the second heat dissipation channels is arranged between every two adjacent ones of the magnetic steel grooves.

Multiple segments of magnetic steel components are arranged in each of the magnetic steel grooves.

According to a second aspect, a technical solution of the application provides a vehicle, and the vehicle includes the electric driving system for the traction battery according to any one of the solutions of the first aspect described above.

According to the electric driving system for the traction battery and the vehicle including the same provided in embodiments of the application, the cooling component is arranged at an interior of the electric motor to cool down the interior of the electric motor, and the single-phase voltage amplitude charged by each of the three phase circuits in the electric motor into the traction battery is controlled by the electric motor controller, to allow the charge-in voltage amplitude charged into the traction battery to be in the preset charging voltage range of the traction battery. In this way, the low-voltage charging pile may charge the high-voltage traction battery without adding an additional boost charging module. Therefore, in the electric driving system provided in the embodiments of the application, the low-voltage charging pile may charge the high-voltage traction battery under a premise of omitting the boost charging module, and a situation where a temperature of the electric motor is too high due to the low-voltage charging pile charging the high-voltage battery may be avoided through the cooling component, thereby ensuring the stability of the electric driving system during the charging while simplifying the structure of the electric driving system.

BRIEF DESCRIPTION OF THE DRAWINGS

FIG. 1 is a schematic diagram of a connection relationship between an electric driving system and a charging pile in an embodiment of the application.

FIG. 2 is a schematic diagram of a connection relationship among an electric driving system, a traction battery and a charging pile in an embodiment of the application.

FIG. 3 is a control strategy for an output voltage from a charging pile when a vehicle with a traction battery in a charging range of 600 V-800 V is charged in case that an upper output limit of the charging pile is 700 V in an embodiment of the application.

FIG. 4 is a control strategy for an output voltage from a charging pile when a vehicle with a traction battery in a charging range of 600 V-800 V is charged in case that an upper output limit of the charging pile is 450 V in an embodiment of the application.

FIG. 5a and FIG. 5b are a schematic cross-sectional diagram and a schematic side diagram of a rotor core provided with multiple heat dissipation channels in an embodiment of the application respectively.

FIG. 6a and FIG. 6b are schematic diagrams of an internal cavity of a motor shaft, a first liquid hole and a second liquid hole in an embodiment of the application.

FIG. 7a is a schematic diagram of a first end plate in an embodiment of the application.

FIG. 7b is a schematic diagram of a second end plate in an embodiment of the application.

FIG. 7c is a schematic diagram of a flow of a cooling medium when multiple heat dissipation channels form a parallel liquid path in an embodiment of the application.

FIG. 7d is a schematic diagram of a first end plate in an embodiment of the application.

FIG. 7e is a schematic diagram of a second end plate in an embodiment of the application.

FIG. 7f is a schematic diagram of a flow of a cooling medium when multiple heat dissipation channels form a series liquid path in an embodiment of the application.

DETAILED DESCRIPTION

Specific implementations of the application will be further described below with reference to the drawings.

It is easy to understand that according to the technical solutions of the application, those of ordinary skill in the art may replace multiple structural modes and implementations with each other without changing the essential spirit of the application. Therefore, the following specific implementations and drawings are only exemplary descriptions of the technical solutions of the application, and should not be considered as the entirety of the application or as a limitation or restriction on the technical solutions of the application.

Orientation terms such as "up", "down", "left", "right", "front", "back", "front side", "back side", "top", "bottom" or the like which are mentioned or may be mentioned in the description are defined relative to structures shown in the drawings. They are relative concepts and thus may be changed correspondingly according to their different positions and different usage states. Therefore, these or other orientation terms should not be interpreted as limitative terms.

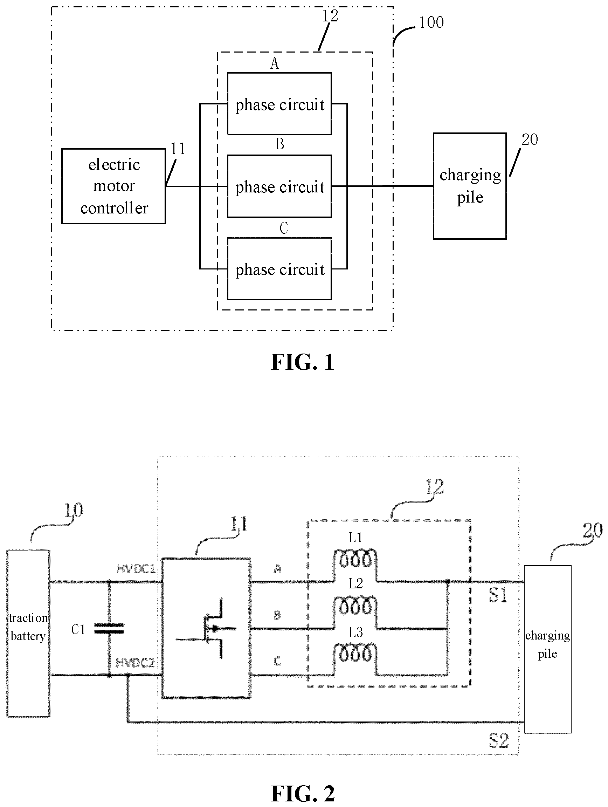

An embodiment of the application provides an electric driving system 100 for a traction battery. As shown in FIG. 1, the system includes an electric motor controller 11, an electric motor 12 and a cooling component. The electric motor 12 includes three phase circuits, such as a phase circuit A, a phase circuit B and a phase circuit C as shown in the figure, a first end of each of the phase circuits is connected to a charging end of a charging pile 200 to receive a charging voltage output from the charging end, and another end of the charging pile 200 is connected to the traction battery. The cooling component is arranged in the electric motor 12, and may absorb heat generated by a heat dissipation component in the electric motor 12 in time to avoid a temperature of the electric motor 12 from becoming too high. In addition, the cooling component will not affect an increase of a volume of the electric driving system 100 since it is arranged in the electric motor 12. The electric motor controller 11 is connected to a second end of each of the phase circuits, and the electric motor controller 11 controls a single-phase voltage amplitude charged by each of the phase circuits into the traction battery, to allow a charge-in voltage amplitude charged by the electric motor 12 into the traction battery to be in a preset charging voltage range of the traction battery. A preset charging voltage of the traction battery is a known parameter. For example, as to a traction battery with a voltage capacity of 800 V, a preset charging voltage range of the traction battery may usually be between 600 V and 800 V. Furthermore, since the traction battery is charged through three phase circuits and there is a specific conversion relationship between each single-phase voltage amplitude in three-phase electricity and a total charge-in voltage amplitude, the total charge-in voltage amplitude may be controlled by controlling each single-phase voltage amplitude. Therefore, on a basis that a charging pile is a 450 V charging pile, the electric motor controller 11 may control charging parameters of each of the phase circuits, to allow the charge-in voltage amplitude charged into the traction battery to be between 600 V and 800 V.

According to the above solution provided in the embodiment of the application, the cooling component is arranged in the electric motor to cool down the heat dissipation component in the electric motor, and the charge-in voltage amplitude charged by each of the phase circuits in the electric motor into the traction battery is controlled by the electric motor controller, to allow the charge-in voltage amplitude to be in the preset charging voltage range of the traction battery. In this way, a low-voltage charging pile may charge a high-voltage traction battery without adding an additional boost charging module. Therefore, in the electric driving system provided in this solution, the low-voltage charging pile may charge the high-voltage traction battery under a premise of omitting the boost charging module, and a situation where a temperature of the electric motor is too high due to the low-voltage charging pile charging the high-voltage battery may be avoided through the cooling component, thereby ensuring the stability of the electric driving system during the charging while simplifying the structure of the electric driving system.

In a specific implementation, a connection relationship among the electric driving system for the traction battery, the traction battery and the charging pile may be a connection relationship as shown in FIG. 2. A low-voltage end of the electric motor controller 11 is connected to a low voltage end HVDC1 of the traction battery 10, and a high-voltage connecting end of the electric motor controller 11 is connected to a high voltage end HVDC2 of the traction battery 10. Each of the phase circuits of the electric motor 12 includes a phase coil, such as a A phase coil L1, a B phase coil L2 and a C phase coil L3 as shown in the figure, and an end of each of the three phase coils is connected to a connecting end of the electric motor 12. Said connecting end is connected to an end of the charging pile 20 through a wire S1. In some embodiments, the electric driving system described above further includes a connection wire S2, and the connection wire S2 is provided with a first end connected to the high-voltage connecting end of the electric motor controller 11 and a second end connected to another end of the charging pile 20, thereby achieving a connection between the charging pile 20 and the high voltage end HVDC2 of the traction battery 10. As in a circuit connection relationship in a related art, a capacitor C1 is connected between the electric motor controller 11 and the traction battery 10, and other electrical components which are not related to improvement points of the application may also be included, which are not described in detail in the solutions of the application. As to the cooling component, the cooling component may not result in an increase of the volume of the electric driving system since it is arranged in the electric motor. In a battery management system of an existing vehicle, an apparatus with a cooling function, such as a cooling liquid circuit, is also provided. In the application, a part of a cooling medium in an existing cooling liquid circuit may be introduced into an interior of the electric motor through a pipeline, thereby cooling the heat dissipation component in the electric motor.

In some solutions, the electric motor controller 11 controls the single-phase voltage amplitude of each of the phase circuits by controlling a power-on duty cycle of each of the phase circuits. As shown in FIG. 2, the electric motor controller 11 includes a control circuit composed of switching transistors, that is, the electric motor controller 11 is connected to the three phase circuits through the switching transistors respectively. The power-on duty cycle of each of the phase circuits may be controlled by controlling an on time of each of the switching transistors through the electric motor controller 11. In an actual application, a frequency of 30 KHz may be selected to control the switching transistors to be turned on, and the wire S1 connects the three phase circuits to the charging pile 20, then based on a variation of the power-on duty cycle of each of the three phase circuits, the single-phase voltage amplitude input by the charging pile 20 to each of the phase circuits in a period may be changed, and thus the charge-in voltage amplitude may be changed.

Furthermore, a ripple current of each of the phase circuits may also be reduced by changing the single-phase voltage amplitude of each of the phase circuits. In the related art, since ripple currents of the three phase circuits A, B and C are phase-shifted by 120 degrees, an eddy current loss of a rotor of the electric motor may be increased, resulting in a serious heating problem of the rotor of the electric motor. An amount of the eddy current loss is proportional to an amplitude of the ripple current. The inventors found during an implementation of the application that when the voltage of the traction battery is fixed, the magnitude of the ripple current of each of the phase coils may be adjusted based on an adjustment of the voltage amplitude. Taking a boost chopper circuit as an example, a relationship among an input voltage amplitude, a current voltage amplitude of the traction battery and the ripple current is explained. An input, a current voltage amplitude of the traction battery and the duty cycle have a relationship as follows:

$$D = 1 - \frac{u_{in}}{u_{dc}} = \frac{u_{dc} - u_{in}}{u_{dc}}$$

here, $u_{in}$ is the input voltage amplitude, $u_{dc}$ is the current voltage amplitude of the traction battery, and D is the duty cycle. A relationship among a variation of the ripple current in a switching period, the duty cycle and the input voltage amplitude is as follows, which is obtained by substituting the above formula of the duty cycle into it:

$$\Delta i = \frac{1}{L} * u_{in} * t = \frac{1}{L} * u_{in} * T_s * D = \frac{T_s}{L} * u_{in} * \frac{u_{dc} - u_{in}}{u_{dc}}$$

$$= \frac{T_s}{L} * \frac{-u_{in} * u_{in} + u_{dc} * u_{in}}{u_{dc}}$$

In the above formula, the period $T_s$ and the inductance L are known parameters. On a basis that the voltage of the battery is fixed, it may be seen from the above formula that the amplitude of the ripple current and the input voltage amplitude are in a quadratic curve relationship. When the input voltage is $u_{dc}/2$, the amplitude of the ripple current $\Delta i$ is maximum, and when the input voltage is zero and $u_{dc}$ respectively, the amplitude of the ripple current $\Delta i$ is zero.

Specifically, as to the solution in the application, it may be determined that the electric motor controller 11 changes the single-phase voltage amplitude of the charging pile for each of the phase circuits by controlling the power-on duty cycle of each of the phase circuits, which is equivalent to changing the input voltage in the above formula, to allow the amplitude of the ripple current to be changed.

According to the above solution of the application, the electric driving system is directly connected to the charging pile 20 through the wire S1 and the connection wire S2, which does not require a boost charging module, thereby simplifying the structure of the electric driving system. Furthermore, the cooling component is arranged in the electric motor to cool the heat dissipation component in the electric motor, to avoid a situation where a temperature of the electric motor is too high when the high-voltage traction battery is charged by using the low-voltage charging pile. Furthermore, the electric motor controller 11 may control power-on duty cycles of the three phase coils in the electric motor, to adjust the input voltage amplitude of the charging pile introduced by the wire S1. As to the phase circuit where each of the phase coils is located, the input voltage amplitude may affect the ripple current. Therefore, an influence of the ripple current in the electric driving system during the charging may be controlled by controlling the single-phase voltage amplitude. The above solution may ensure a stability of the electric driving system during the charging while simplify the structure of the electric driving system.

Based on the above analysis, when the charging is performed, if the electric driving system wants to reduce the amplitude of the ripple current of each of the phase circuits, the input voltage amplitude of the charging pile should be away from a half of the current voltage of the traction battery as much as possible. When the input voltage amplitude of the charging pile is reduced or increased by the same voltage amplitude relative to a half of the voltage of the traction battery, the input voltage amplitude of the charging pile has the same effect on the reduction of the ripple current. For example, as to a 800 V traction battery, when the input voltage of the charging pile is 400 V, the amplitude of the ripple current in the electric driving system is maximum, and when the input voltage of the charging pile is 700 V and 100 V respectively, a difference between 700 V and a half (i.e., 400 V) of the voltage of the traction battery is the same as a difference between 100 V and a half of the voltage of the traction battery, and the same effect of reducing the amplitude of the ripple current is achieved at this time. In some embodiments, during the charging, charging situations are divided into two situations as follows.

First situation: an upper output limit of the charging pile is high.

When the charging voltage is greater than a first voltage value, the electric motor controller 11 controls the single-phase voltage amplitude of each of the phase circuits to be less than a first set threshold, the first set threshold allows a current in each of the phase circuits to be less than a ripple current, and the first voltage value is determined according to a preset minimum charging voltage value of the traction battery. The first set threshold may be pre-set and stored in the electric motor controller 11, and the first set threshold is an empirical value or a preferred value obtained through experimental verification in advance.

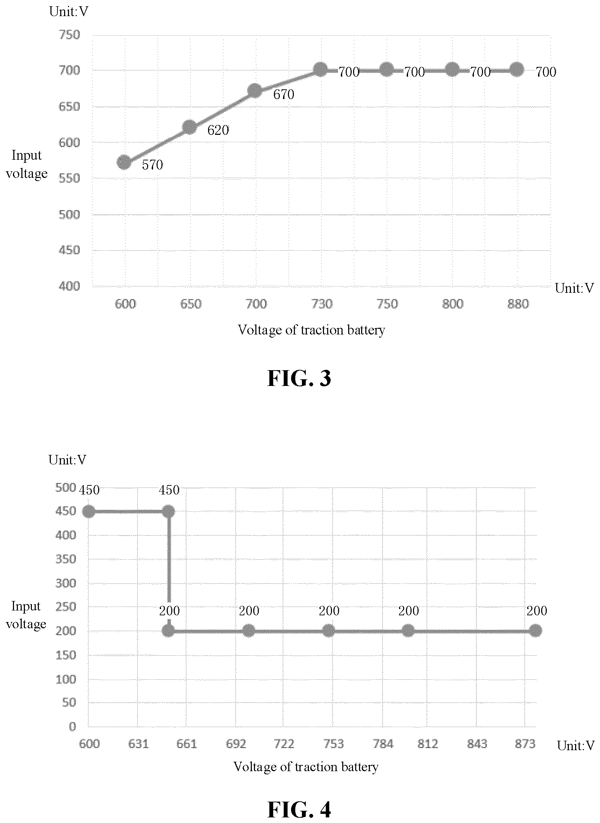

In the embodiment of the application, the first voltage value may be selected according to a charging range of the traction battery, and may be close to the preset minimum charging voltage value. For example, if the preset charging voltage of the traction battery is in a range of 600 V-800 V, the first voltage value may be selected as 600 V. As shown in FIG. 3, it is a charging strategy for the electric motor controller 11 to control the input voltage amplitude when a traction battery in a charging range of 600 V-800 V is charged in case that an upper output limit of the charging pile is 700 V. The inventors found during the implementation of the application that when the upper output limit of the charging pile is high, the input voltage amplitude of the charging pile is kept at a highest level (i.e., close to 700 V) during the charging, which is conducive to reducing the amplitude of the ripple current of the electric driving system, thereby improving the stability during the charging and reducing heating of the rotor of the electric motor.

Second situation: an upper output limit of the charging pile is low.

When the charging voltage is less than a second voltage value, the electric motor controller 11 controls the single-phase voltage amplitude of each of the phase circuits to allow the charge-in voltage amplitude to meet: |the charge-in voltage amplitude - a current voltage amplitude of the traction battery $\times A$|>a second set threshold. Here, "| |" represents an absolute value symbol, A is an adjustment coefficient and A<1, the second voltage value is determined according to the preset minimum charging voltage value of the traction battery, and the second voltage value is less than the first voltage value. The second set threshold may be pre-set and stored in the electric motor controller 11, and the second set threshold is an empirical value or a preferred value obtained through experimental verification in advance. In some embodiments, A is 50%, since the half of the current voltage amplitude of the traction battery corresponds to a situation where the ripple current is maximum.

In the embodiment of the application, the second voltage value may be selected according to the charging range of the traction battery. For example, when the charging range of the traction battery is 600 V-800 V, the second voltage value may be selected as 550 V. As shown in FIG. 4, it is a charging strategy for the electric motor controller 11 to control the input voltage amplitude when a traction battery in a charging range of 600 V-800 V is charged in a case that an upper output limit voltage of the charging pile is 450 V. Since the amplitude of the ripple current is maximum when the input voltage amplitude is 400 V, a high input voltage amplitude serves as an input voltage in case that the voltage of the traction battery is small, with a purpose of charging the traction battery quickly. When the voltage of the traction battery exceeds a certain interval of a minimum value of its charging range, the input voltage amplitude may be reduced to make it away from the half of the voltage of the traction battery as much as possible, to reduce the amplitude of the ripple current, improve the stability of the electric driving system, and reduce heating of the rotor.

In some solutions, the cooling component may be a cooling functional element suitable to be arranged in the electric motor, such as a ceramic radiator, etc. In some solutions, the cooling component includes a cooling liquid path, the cooling liquid path is at least partially arranged in the electric motor and is in contact with a heat dissipation component, and a cooling liquid medium in the cooling liquid path exchanges heat with the heat dissipation component. As described above, in the existing vehicle, the battery management system itself also is provided with a cooling liquid circuit. This solution may introduce a part of the cooling liquid to the interior of the electric motor without changing an original cooling liquid circuit, to achieve the cooling of the heat dissipation component in the electric motor, which may not increase the volume of the system and may not do too much variation to internal structures.

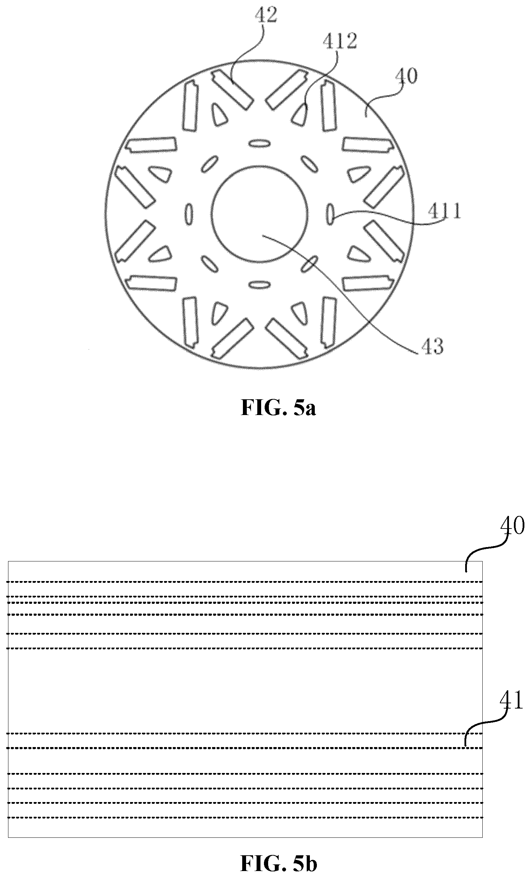

Further, as shown in FIG. 5a and FIG. 5b, the heat dissipation component includes a rotor core 40 of the electric motor, and the cooling liquid path includes multiple heat dissipation channels 41 penetrating through the rotor core 40. Holes at two ends of a part of the heat dissipation channels 41 are first cooling holes 411, and holes at two ends of a part of the heat dissipation channels 41 are second cooling holes 412. Through this solution, heat dissipation capability of the rotor core 40 in the electric motor is increased, the heat dissipation channels 41 are established in the rotor core 40, and the rotor core 40 is directly cooled down when it is seriously heated or at a high temperature, to reduce a risk of heating of the rotor core and increase a continuous working time.

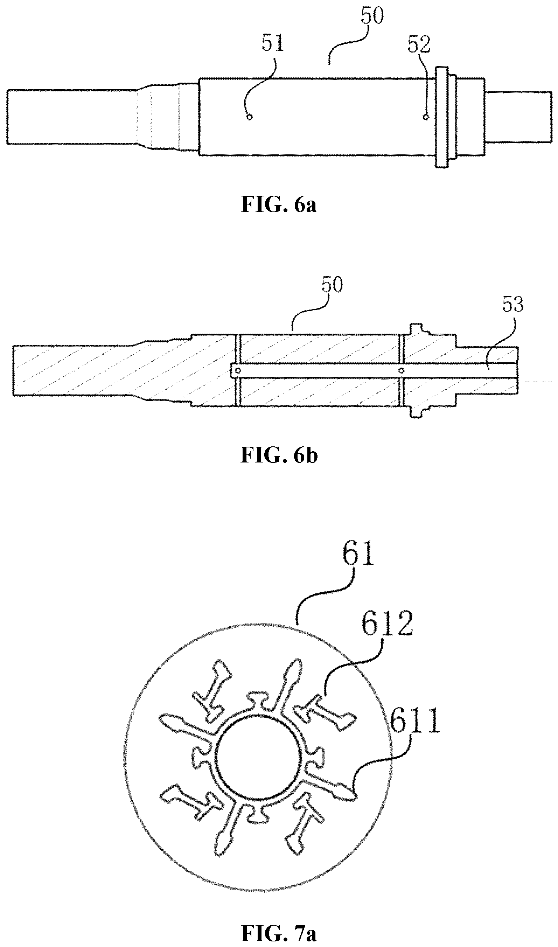

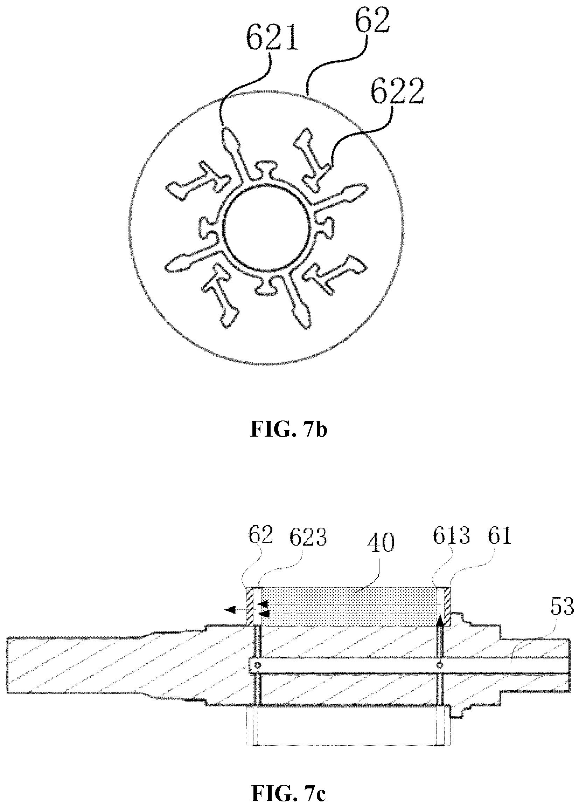

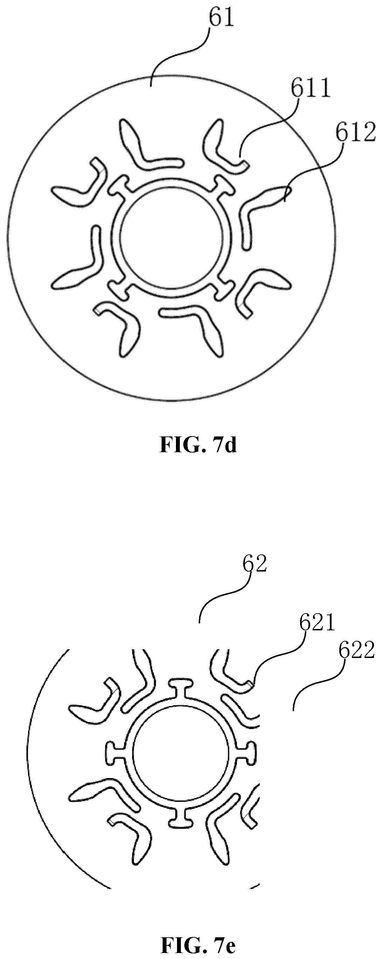

As shown in FIG. 6a and FIG. 6b, in the electric driving system for the traction battery, a motor shaft 50 of the electric motor is provided with an inner cavity 53, and the inner cavity 53 is provided with a first liquid hole 51 and a second liquid hole 52. With reference to FIG. 7a to FIG. 7f, the rotor core 40 may be arranged around the motor shaft 50 through a mounting hole 43 arranged at a center of the rotor core 40, a first end plate 61 is arranged at a first end of the motor shaft 50, a first annular cavity 613 is formed between the first end plate 61 and a first side of the rotor core 40, and the first annular cavity 613 is in communicate with the first liquid hole 51. A second end plate 62 is arranged at a second end of the motor shaft 50, a second annular cavity 623 is formed between the second end plate 62 and a second side of the rotor core 40, and the second annular cavity 623 is in communicate with the second liquid hole 52. The first annular cavity 613 and the second annular cavity 623 are in communicate with at least one of the multiple heat dissipation channels 41 respectively. In this solution, the heat dissipation channels 41 are arranged inside the rotor core 40, the first cooling holes 411 and the second cooling holes 412 are provided at two sides of the heat dissipation channels 41, each of the first end plate 61 and the second end plate 62 is arranged at a respective one of the two ends of the motor shaft 50, and surfaces of the end plates are specially designed. In this way, channels for the flow of the cooling medium are formed between the end plates and the heat dissipation channels inside the rotor core, thereby increasing a contact area between the cooling medium and the rotor core, which may effectively cool the rotor core 40 while also cooling the motor shaft 50 and the two end plates, and therefore may reduce the temperature of the rotor core and the magnetic steel and improve the performance of the electric motor.

Further, with reference to FIG. 7a to FIG. 7c, in the electric driving system for the traction battery, the first end plate 61 is provided with multiple first liquid grooves 612 and multiple first liquid spraying ports 612, and the second end plate 62 is provided with multiple second liquid grooves 621 and multiple second liquid spraying ports 622. At least two of the multiple first liquid grooves 612 of the first end plate 61 are in communicate with the multiple second liquid spraying ports 622 in the second annular cavity 623 through different heat dissipation channels 41 respectively, at least two of the multiple second liquid grooves 621 of the second end plate 62 are in communicate with the multiple first liquid spraying ports 612 in the first annular cavity 613 through different heat dissipation channels 41 respectively, to allow the multiple heat dissipation channels 41 to form a parallel liquid path. With reference to FIG. 7c, in the parallel liquid path, the cooling medium may flow from a side of the rotor core to another side of the rotor core and then may be directly sprayed out from the another side, thereby absorbing heat generated by the rotor core during flow. The figure only takes the cooling medium present in two of the multiple heat dissipation channels as an example. In an actual application, a number of the heat dissipation channels may be adjusted according to requirements.

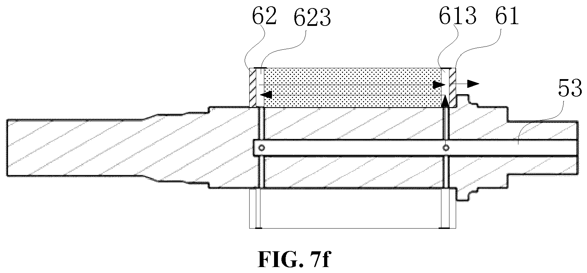

As another possible implementation, as shown in FIG. 7d to FIG. 7f, each of the multiple first liquid grooves 611 of the first end plate 61 is in communicate with a respective one of the multiple first liquid spraying ports 612 of the first end plate 61 through one of the multiple heat dissipation channels, a respective one of the multiple second liquid grooves 621 of the second end plate 62 and another one of the multiple heat dissipation channels in sequence, and each of the multiple second liquid grooves 621 of the second end plate 62 is in communicate with a respective one of the multiple second liquid spraying ports 622 of the second end plate 62 through one of the multiple heat dissipation channels, a respective one of the multiple first liquid grooves 611 of the first end plate 61 and another one of the multiple heat dissipation channels in sequence, to allow the multiple heat dissipation channels to form a series liquid path. With reference to FIG. 7f, in the series liquid path, the cooling medium may flow from a side of the rotor core to another side of the rotor core and then may be sprayed out after returning to the original side, thereby absorbing heat generated by the rotor core during flow. The figure only takes the cooling medium present in two of the multiple heat dissipation channels as an example. In an actual application, a number of the heat dissipation channels may be adjusted according to requirements.

It may be understood that in the above solution, numbers and positions of the first liquid grooves 611, the first liquid spraying ports 612, the second liquid grooves 621 and the second liquid spraying ports 622 cooperate with positions of the first cooling holes 411 and the second cooling holes 412 of the rotor core 40, to allow the cooling medium to form a cooling circuit among the liquid grooves, cooling holes and liquid spraying ports described above.

In some embodiments, in the above solution, heat dissipation channels corresponding to the first cooling holes 411 are first heat dissipation channels, and heat dissipation channels corresponding to the second cooling holes 412 are second heat dissipation channels. As shown in FIG. 5a, multiple first heat dissipation channels are uniformly distributed along a first circumference in the rotor core 40, multiple second heat dissipation channels are uniformly distributed along a second circumference in the rotor core 40, each of the first circumference and the second circumference has the same central axis as the rotor core, and a diameter of the first circumference is less than a diameter of the second circumference. On a basis of meeting performance, with reference to the figure, each of the first cooling holes 411 is an elliptical hole and close to an inner ring of the core, which may effectively cool the rotor core, and each of the second cooling holes 412 may be a triangular hole, a waist-shaped hole, an elliptical hole, or another polygonal hole, and the second cooling holes 412 are close to magnetic steel grooves 42, which may effectively cool the magnetic steel and the rotor core. In an actual application, shapes of the cooling holes described above may be adjusted and are not limited to the above exemplary descriptions. Further, a number of the second heat dissipation channels is determined according to a number of magnetic steel grooves 42 of the rotor core 40, and one of the second heat dissipation channels is arranged between every two adjacent ones of the magnetic steel grooves 42. Such an arrangement may cool the magnetic steel better.

Further, in the above solution, multiple segments of magnetic steel components are arranged in each of the magnetic steel grooves 42. That is, the magnetic steel is divided into multiple small segments of magnetic steel components, and then the multiple small segments of magnetic steel components are placed into the magnetic steel grooves 42, which may reduce an eddy current loss of the magnetic steel at the same working condition.

In some embodiments of the application, there is also provided a vehicle, the vehicle includes the electric driving system for the traction battery as described in any one of the solutions of the above embodiments. In the electric driving system of the vehicle according to this solution, a booster accessory composed of external components is removed, a cooling component is arranged in the electric motor, and the electric motor controller controls the input voltage amplitude of the charging pile in real time, thereby ensuring the working stability of the electric driving system while ensuring a simplification of the structure of the electric driving system.

The above technical solutions may be combined with each other as required, to achieve the best technical effect.

The above descriptions are only principles and preferred embodiments of the application. It should be noted that several other variants may also be made by those of ordinary skill in the art based on the principles of the application, and should also be considered as the scope of protection of the application.

## Claims

1. An electric driving system for a traction battery, comprising an electric motor controller, an electric motor and a cooling component,

wherein the electric motor comprises three phase circuits, and a first end of each of the three phase circuits is connected to a charging end of a charging pile to receive a charging voltage output from the charging end, the cooling component is arranged in the electric motor,

the electric motor controller is connected to a second end of each of the three phase circuits, and the electric motor controller controls a single-phase voltage amplitude charged by each of the three phase circuits into the traction battery, to allow a charge-in voltage amplitude charged by the electric motor into the traction battery to be in a preset charging voltage range of the traction battery.

2. The electric driving system for the traction battery according to claim 1, wherein the electric motor controller controls the single-phase voltage amplitude of each of the three phase circuits by controlling a power-on duty cycle of each of the three phase circuits, wherein an input voltage amplitude, a current voltage amplitude of the traction battery and the duty cycle have a relationship as follows:

$$D = 1 - \frac{u_{in}}{u_{dc}} = \frac{u_{dc} - u_{in}}{u_{dc}}$$

wherein $u_{in}$ is the input voltage amplitude, $u_{dc}$ is the current voltage amplitude of the traction battery, and D is the duty cycle.

3. The electric driving system for the traction battery according to claim 1, wherein when the charging voltage is greater than a first voltage value, the electric motor controller controls the single-phase voltage amplitude of each of the three phase circuits to be less than a first set threshold, the first set threshold allows a current in each of the three phase circuits to be less than a ripple current, and the first voltage value is determined according to a preset minimum charging voltage value of the traction battery, wherein the first set threshold is pre-set and stored in the electric motor controller.

4. The electric driving system for the traction battery according to claim 3, wherein when the charging voltage is less than a second voltage value, the electric motor controller controls the single-phase voltage amplitude of each of the three phase circuits to allow the charge-in voltage amplitude to meet: |the charge-in voltage amplitude - a current voltage amplitude of the traction battery ×A|>a second set threshold; wherein "| |" represents an absolute value symbol, A is an adjustment coefficient and A<1, the second voltage value is determined according to the preset minimum charging voltage value of the traction battery, and the second voltage value is less than the first voltage value; wherein the second set threshold is pre-set and stored in the electric motor controller.

5. The electric driving system for the traction battery according to claim 3, wherein the first voltage value is set to be close to the preset minimum charging voltage value according to a charging range of the traction battery.

6. The electric driving system for the traction battery according to claim 4, wherein the second voltage value is 550 V when a charging range of the traction battery is 600 V-800 V.

7. The electric driving system for the traction battery according to any one of claims 1 to 4, further comprising:

a connection wire, provided with a first end connected to a high voltage end of the traction battery, and a second end connected to another charging end of the charging pile,
wherein the cooling component comprises a cooling liquid path, the cooling liquid path is at least partially arranged in the electric motor and is in contact with a heat dissipation component, and a cooling liquid medium in the cooling liquid path exchanges heat with the heat dissipation component,
the heat dissipation component comprises a rotor core of the electric motor, and the cooling liquid path comprises a plurality of heat dissipation channels penetrating through the rotor core.

8. The electric driving system for the traction battery according to claim 7, wherein a motor shaft of the electric motor is provided with an inner cavity, and the inner cavity is provided with a first liquid hole and a second liquid hole,

a first end plate is arranged at a first end of the motor shaft, a first annular cavity is formed between the first end plate and a first side of the rotor core, and the first annular cavity is in communicate with the first liquid hole,
a second end plate is arranged at a second end of the motor shaft, a second annular cavity is formed between the second end plate and a second side of the rotor core, and the second annular cavity is in communicate with the second liquid hole,
the first annular cavity and the second annular cavity are in communicate with at least one of the plurality of heat dissipation channels respectively.

9. The electric driving system for the traction battery according to claim 8, wherein the first end plate is provided with a plurality of first liquid grooves and a plurality of first liquid spraying ports, and the second end plate is provided with a plurality of second liquid grooves and a plurality of second liquid spraying ports,
at least two of the plurality of first liquid grooves of the first end plate are in communicate with the plurality of second liquid spraying ports in the second annular cavity through different heat dissipation channels respectively, and at least two of the plurality of second liquid grooves of the second end plate are in communicate with the plurality of first liquid spraying ports in the first annular cavity through different heat dissipation channels respectively, to allow the plurality of heat dissipation channels to form a parallel liquid path.

10. The electric driving system for the traction battery according to claim 9, wherein each of the plurality of first liquid grooves of the first end plate is in communicate with a respective one of the plurality of first liquid spraying ports of the first end plate through one of the plurality of heat dissipation channels, a respective one of the plurality of second liquid grooves of the second end plate and another one of the plurality of heat dissipation channels in sequence, and each of the plurality of second liquid grooves of the second end plate is in communicate with a respective one of the plurality of second liquid spraying ports of the second end plate through one of the plurality of heat dissipation channels, a respective one of the plurality of first liquid grooves of the first end plate and another one of the plurality of heat dissipation channels in sequence, to allow the plurality of heat dissipation channels to form a series liquid path.

11. The electric driving system for the traction battery according to claim 7, wherein holes at two ends of at least one of the plurality of heat dissipation channels are first cooling holes, holes at two ends of at least one of the plurality of heat dissipation channels are second cooling holes, heat dissipation channels corresponding to the first cooling holes are first heat dissipation channels, and heat dissipation channels corresponding to the second cooling holes are second heat dissipation channels,
the first heat dissipation channels are uniformly distributed along a first circumference in the rotor core, the second heat dissipation channels are uniformly distributed along a second circumference in the rotor core, each of the first circumference and the second circumference has a same central axis as the rotor core, and a diameter of the first circumference is less than a diameter of the second circumference.

12. The electric driving system for the traction battery according to claim 11, wherein a number of the second heat dissipation channels is determined according to a number of magnetic steel grooves of the rotor core, and one of the second heat dissipation channels is arranged between every two adjacent ones of the magnetic steel grooves, wherein a plurality of segments of magnetic steel components are arranged in each of the magnetic steel grooves.

13. A vehicle, comprising the electric driving system for the traction battery according to any one of claims 1 to 12.

**FIG. 1**

**FIG. 2**

**FIG. 3**

**FIG. 4**

FIG. 5a

FIG. 5b

**FIG. 6a**

**FIG. 6b**

**FIG. 7a**

621  62
622

**FIG. 7b**

62  623  40  613  61
53

**FIG. 7c**

**FIG. 7d**

**FIG. 7e**

62  623                    613  61

                                                    53

**FIG. 7f**

## INTERNATIONAL SEARCH REPORT

| International application No. |
| --- |
| **PCT/CN2023/139865** |

| A. | CLASSIFICATION OF SUBJECT MATTER |
| --- | --- |

B60L53/10(2019.01)i; H02J7/00(2006.01)i

According to International Patent Classification (IPC) or to both national classification and IPC

| B. | FIELDS SEARCHED |
| --- | --- |

Minimum documentation searched (classification system followed by classification symbols)

IPC:B60L,H02J

Documentation searched other than minimum documentation to the extent that such documents are included in the fields searched

Electronic data base consulted during the international search (name of data base and, where practicable, search terms used)

CNKI, CNTXT, ENTXT, DWPI, VEN: 电池, 电机, 充电, 冷却, 电压, 占空比; battery, motor, charg+, cool+, voltage, duty

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2020177014 A1 (HYUNDAI MOTOR CO., LTD. et al.) 04 June 2020 (2020-06-04) description, paragraphs 0028-0057, and figures 1-3 | 1-13 |
| Y | CN 111355429 A (BYD CO., LTD.) 30 June 2020 (2020-06-30) description, paragraph 123 | 1-13 |
| A | CN 111355432 A (BYD CO., LTD.) 30 June 2020 (2020-06-30) entire document | 1-13 |
| A | CN 113022344 A (CHONGQING CHANG'AN NEW ENERGY AUTOMOBILE TECHNOLOGY CO., LTD.) 25 June 2021 (2021-06-25) entire document | 1-13 |
| A | CN 115230498 A (BEIJING ELECTRIC VEHICLE CO., LTD.) 25 October 2022 (2022-10-25) entire document | 1-13 |
| A | CN 217455656 U (ROAD MACHINERY BRANCH COMPANY OF XCMG CONSTRUCTION MACHINERY CO., LTD.) 20 September 2022 (2022-09-20) entire document | 1-13 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 March 2024** | **25 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/139865** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022209565 A1 (HUAWEI DIGITAL POWER TECHNOLOGIES CO., LTD.) 30 June 2022 (2022-06-30)<br>    entire document | 1-13 |

Form PCT/ISA/210 (second sheet) (July 2022)

| | INTERNATIONAL SEARCH REPORT | | International application No. |
|---|---|---|---|
| | Information on patent family members | | **PCT/CN2023/139865** |

| Patent document cited in search report | | | Publication date (day/month/year) | Patent family member(s) | | | Publication date (day/month/year) |
|---|---|---|---|---|---|---|---|
| US | 2020177014 | A1 | 04 June 2020 | US | 11171504 | B2 | 09 November 2021 |
| | | | | KR | 20200068175 | A | 15 June 2020 |
| CN | 111355429 | A | 30 June 2020 | None | | | |
| CN | 111355432 | A | 30 June 2020 | None | | | |
| CN | 113022344 | A | 25 June 2021 | None | | | |
| CN | 115230498 | A | 25 October 2022 | None | | | |
| CN | 217455656 | U | 20 September 2022 | None | | | |
| US | 2022209565 | A1 | 30 June 2022 | US | 11791649 | B2 | 17 October 2023 |
| | | | | EP | 4032743 | A1 | 27 July 2022 |
| | | | | WO | 2022156387 | A1 | 28 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211632911